# EUROPEAN PATENT APPLICATION

(11) **EP 4 848 424 A2**
(43) Date of publication of application: **02.12.2026**
(21) Application number: 26206167.4
(22) Date of filing: 11.12.2023
(51) Int. Cl.: H01M 50/171

(54) **BATTERY AND ELECTRONIC DEVICE**

(30) Priority: 09.12.2022 CN 202223306513 U
(62) Document number(s) of the earlier application(s) in accordance with Art. 76 EPC: 23900104.3 / 4 513 649
(71) Applicant: Zhuhai CosMX Battery Co., Ltd., Zhuhai, Guangdong 519180 (CN)
(72) Inventor: XI, Yang, Zhuhai, Guangdong, 519180 (CN); ZHOU, Jinyong, Zhuhai, Guangdong, 519180 (CN); XIE, Jichun, Zhuhai, Guangdong, 519180 (CN); WEI, Zhida, Zhuhai, Guangdong, 519180 (CN)
(74) Representative: Vossius & Partner Patentanwälte Rechtsanwälte mbB

(57) **Abstract**

The present invention relates to a battery which comprises a battery body and a protective glue layer, wherein the protective glue layer comprises a first adhesive segment and a second adhesive segment that are circumferentially coated on an outer peripheral wall of the battery body, and the first adhesive segment and the second adhesive segment have a connecting notch of the protective glue layer formed therebetween in a circumferential direction of the outer peripheral wall. The battery body comprises a shell, a battery cell, a first shell cover, a second shell cover and a first insulating sheet. The shell comprises an installation cavity with an opening, and the battery cell is disposed in the installation cavity through the opening. The first shell cover, the first insulating sheet and the second shell cover are stacked along a first direction. The first insulating sheet is disposed between the first shell cover and the second shell cover, and the second shell cover is disposed in the installation cavity through the opening. Part of the outer peripheral wall of the battery body is exposed outside the protective glue layer through the connecting notch.

## Description

The present application is a divisional application of EP Patent Application No. 23900104.3, filed on December 11, 2023, which claims priority to the Chinese patent disclosure No. 202223306513.4, entitled "Battery and Electronic Device", and filed with the China National Intellectual Property Administration on December 9, 2022. The entire contents of both of the aforementioned applications are incorporated herein by reference.

### TECHNICAL FIELD

Embodiments of the present application relate to the technical field of structure of batteries, and in particular to a battery and an electronic device.

### BACKGROUND

Batteries (such as lithium-ion batteries) have been widely used as power supply devices. A button battery is a small-sized battery, an outer peripheral surface of which is covered with a layer of circumferential glue, to give good protection for the button battery. The button battery is accommodated in a battery compartment.

In the related art, the button battery is fixed in the battery compartment by means of gluing. However, since the entire outer peripheral surface of the button battery is covered with the circumferential glue, all the glue after gluing will stick to the circumferential glue, resulting in the body of the button battery not being fixed by glue, and the button battery being prone to shaking when in use and thus having low safety.

### SUMMARY

Embodiments of the present application provide a battery and an electronic device to solve the problems of poor fixing effect and low safety of the button battery.

On the one hand, an embodiment of the present application provides a battery, including a battery body and a protective glue layer. The protective glue layer includes a first adhesive segment and a second adhesive segment that are circumferentially coated on an outer peripheral wall of the battery body, and the first adhesive segment and the second adhesive segment have a connecting notch formed therebetween in a circumferential direction of the outer peripheral wall. Both a length of the first adhesive segment and a length of the second adhesive segment are less than a thickness of the battery body in a first direction, to form an exposed area, and part of the outer peripheral wall of the battery body is exposed outside the protective glue layer through the connecting notch and the exposed area.

In some embodiments that may include the above embodiment, the protective glue layer further includes a third adhesive segment, the third adhesive segment is disposed between the first adhesive segment and the second adhesive segment, and the third adhesive segment is connected to both the first adhesive segment and the second adhesive segment. In the first direction, a width of the third adhesive segment is smaller than a width of the battery body, and the width of the third adhesive segment is greater than a width of the first adhesive segment and a width of the second adhesive segment.

In some embodiments that may include the above embodiment, the battery body includes a shell, a battery cell, a first shell cover, a second shell cover and a first insulating sheet. The shell includes an installation cavity with an opening, and the battery cell is disposed in the installation cavity through the opening. The first shell cover, the first insulating sheet and the second shell cover are stacked along the first direction, the first insulating sheet is disposed between the first shell cover and the second shell cover, and the second shell cover is disposed in the installation cavity through the opening. The first shell cover has a first through hole, the first insulating sheet has a second through hole, a central axis of the first through hole coincides with a central axis of the second through hole, the second shell cover has a connecting terminal extending toward the first shell cover, the connecting terminal matches both the first through hole and the second through hole, and the connecting terminal is exposed on a surface of the first shell cover through the first through hole and the second through hole. The battery cell includes a first tab and a second tab, the first tab is electrically connected to an inner wall surface of the shell, and the second tab is electrically connected to the second shell cover.

In some embodiments that may include the above embodiment, the first shell cover includes a front connecting surface and a reverse connecting surface opposite to each other along the first direction, the reverse connecting surface is connected to the first insulating sheet, and an edge of the reverse connecting surface is provided with an annular connecting groove, and the annular connecting groove matches the opening.

In some embodiments that may include the above embodiment, the battery body further includes a first adapting member, a second adapting member and a second insulating sheet. The front connecting surface is provided with an adhesive sinking platform matching the second insulating sheet. A first connecting section of the first adapting member is electrically connected to the front connecting surface of the first shell cover, and a first adaptor of the first adapting member is correspondingly placed on the second insulating sheet. A second connecting section of the second adapting member is electrically connected to the connecting terminal, and a second adaptor of the second adapting member is correspondingly placed on the second insulating sheet.

In some embodiments that may include the above embodiment, the first adapting member further includes a positioning member, the first connecting section includes a first end and a second end, the first adaptor is connected to the first end, the positioning member is connected to the second end, the positioning member extends out of the battery body in a second direction, and the positioning member is disposed on a center line between the first adaptor and the second adaptor. The second direction is perpendicular to the first direction.

In some embodiments which may include the above embodiment, the positioning member is parallel to the first connecting section.

In some embodiments that may include the above embodiment, the positioning member is perpendicular to the first connecting section, the positioning member extends along the first direction, and a gap is present between the positioning member and the outer peripheral wall of the battery body.

In some embodiments that may include the above embodiment, the positioning member includes a bent end, and the bent end is perpendicular to the outer peripheral wall of the battery body and extends away from the outer peripheral wall of the battery body.

In some embodiments that may include the above embodiment, a center line of the third adhesive segment is aligned with a center line of the first adapting member and a center line of the second adapting member.

In some embodiments that may include the above embodiment, the connecting notch is symmetrically provided with the first adapting member and the second adapting member along a center line of the battery body.

On the other hand, an embodiment of the present application also provides an electronic device, which includes the battery described above and a battery compartment. The battery is disposed inside the battery compartment, part of the outer peripheral wall of the battery body is exposed outside the protective glue layer through the exposed area, and an adhesive glue layer is disposed between the part of the outer peripheral wall and an inner wall of the battery compartment. Another part of the outer peripheral wall of the battery body is exposed outside the protective glue layer through the connecting notch, and the electronic device further includes wirings located in the connecting notch.

In the battery and the electronic device provided in the embodiments of the present application, the protective glue layer which does not completely cover the battery body is disposed on the outer peripheral wall of the battery body, so that the part of the outer peripheral wall of the battery body is exposed to the outside, thereby ensuring the installation and fixation of the battery after installed in the battery compartment, avoiding the problem of battery shaking caused by the glue only fixing the protective glue layer but not fixing the battery body, and meanwhile effectively solving the problem of interference between another connecting wire of the device or a connecting wire of the battery and the protective glue layer.

### BRIEF DESCRIPTION OF DRAWINGS

The accompanying drawings, which are incorporated in this specification and constitute a part of this specification, illustrate the embodiments complying with the present application and serve to explain the principles of the present application together with this specification.
FIG. 1 is a schematic diagram showing an exploded structure of a battery according to an embodiment of the present application.
FIG. 2 is a first structural schematic diagram showing the battery according to an embodiment of the present application.
FIG. 3 is a structural schematic diagram showing a circumferential glue of the battery according to an embodiment of the present application.
FIG. 4 is a first structural schematic diagram showing a battery cell of the battery according to an embodiment of the present application.
FIG. 5 is a second structural schematic diagram showing the battery cell of the battery according to an embodiment of the present application.
FIG. 6 is a third structural schematic diagram showing the battery cell of the battery according to an embodiment of the present application.
FIG. 7 is a first structural schematic diagram showing a first shell cover of the battery according to an embodiment of the present application.
FIG. 8 is a second structural schematic diagram showing the first shell cover of the battery according to an embodiment of the present application.
FIG. 9 is a structural schematic diagram showing a second shell cover of the battery according to an embodiment of the present application.
FIG. 10 is a structural schematic diagram showing a first adapting member of the battery according to an embodiment of the present application.
FIG. 11 is a structural schematic diagram showing a second adapting member of the battery according to an embodiment of the present application.
FIG. 12 is a second structural schematic diagram showing the battery according to an embodiment of the present application.
FIG. 13 is a cross-sectional view along A-A direction in FIG. 12.
FIG. 14 is an enlarged view of portion B in FIG. 13.
FIG. 15 is a structural schematic diagram showing a shell of the battery according to an embodiment of the present application.
FIG. 16 is a cross-sectional view taken along C-C direction in FIG. 15.
FIG. 17 is an enlarged view of part D in FIG. 16.
FIG. 18 is a structural schematic diagram showing a sealing nail of the battery according to an embodiment of the present application.

Description of reference numerals:
100: Shell cover;
101: First shell cover; 102: First insulating sheet; 103: Second shell cover;
1011: First through hole; 1012: Front connecting surface; 1013: Reverse connecting surface; 1014: Adhesive sinking platform; 1015: Annular connecting groove; 1031: Connecting terminal;
200: Shell;
201: Bottom surface; 202: Installation cavity; 203: Liquid-injection hole; 204: Sealing face;
300: Battery cell;
301: Third insulating sheet; 302: Fourth insulating sheet; 303: Second tab; 304: Second weld mark; 305: First tab; 306: First weld mark;
400: Protective glue layer;
401: First adhesive segment; 402: Second adhesive segment; 403: Third adhesive segment; 404: Connecting notch;
500: Second adapting member;
501: Second connecting section; 502: Second adaptor;
600: First adapting member;
601: First connecting section; 602: First adaptor; 603: Positioning member; 604: Bent end;
700: Second insulating sheet;
800: Sealing nail;
801: Abutment portion; 802: Sealing protrusion;
900: Top insulating sheet.

The specific embodiments of the present application have been illustrated according to above-described accompanying drawings, which will be described in more detail hereinafter. These accompanying drawings and textual description are not intended to limit the scope of the present application in any way, but rather to illustrate the concept of the present application to those skilled in the art with reference to the specific embodiment.

### DESCRIPTION OF EMBODIMENTS

A button battery is a small-sized battery. An outer peripheral surface of the button battery is covered with a layer of circumferential glue, to give good protection for the button battery. A battery compartment is a cavity for accommodating the button battery. In the related art, gluing is required to achieve the installation and fixation of the button battery after the button battery is installed in the battery compartment. However, since the entire outer peripheral surface of the button battery is covered with the circumferential glue, all the glue after gluing will stick to the circumferential glue, resulting in the body of the button battery not being fixed by the glue and the button battery being prone to shaking when in use, therefore the normal use of the button battery is affected and the safety of the button battery is low. Meanwhile, since the entire outer peripheral surface of the button battery is covered with the circumferential glue, other connecting wires of a device or connecting wires of the button battery are prone to interfering with the circumferential glue, affecting the installation of the button battery into the compartment.

In light of the above technical problems, an embodiment of the present application provides a battery, where an outer peripheral wall of the battery body is provided with a protective glue layer. The protective glue layer does not completely cover the battery body, so that part of the outer peripheral wall of the battery body is exposed outside. After gluing, the glue can stick to the part of the outer peripheral wall of the battery body, ensuring the installation and fixation of the battery after installed into the battery compartment, and avoiding the problem of battery shaking caused by the glue only fixing the protective glue layer but not fixing the battery body. Meanwhile, other connecting wires of the device or the connecting wires of the button battery will be routed and connected through the part of the outer peripheral wall exposed to the outside, effectively solving the problem of the interference between the other connecting wires of the device or the connecting wires of the battery and the protective glue layer.

The embodiments of the present application are applicable to button batteries, and are also applicable to other types of batteries. The battery provided in the embodiments of the present application will be described in detail below using the button battery as an example.

In order to make the purpose, technical solutions and advantages of embodiments of the present application clearer, the technical solutions in the embodiments of the present application will be clearly and comprehensively described below in combination with the accompanying drawings in the embodiments of the present application. Obviously, the described embodiments are only part of the embodiments, not all of the embodiments, of the present application. Based on the embodiments in the present application, all other embodiments obtained by those skilled in this field without any creative effort shall fall within the protection scope of the present application.

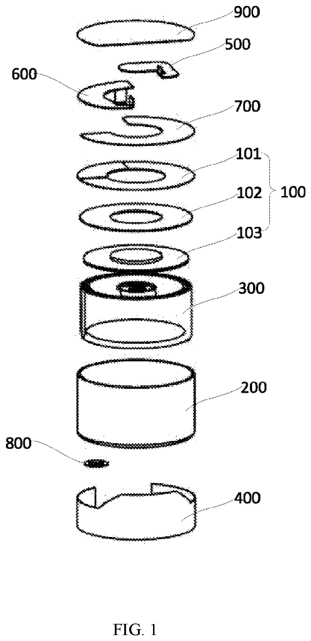

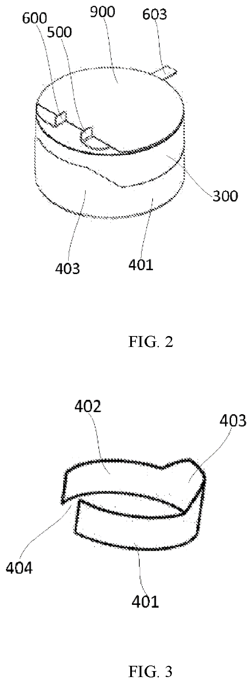

Please referring to FIGs. 1-3, FIG. 1 is a schematic diagram showing an exploded structure of the battery according to an embodiment of the present application. FIG. 2 is a structural schematic diagram showing an assembled battery according to an embodiment of the present application. FIG. 3 is a structural schematic diagram showing a protective glue layer of the battery according to an embodiment of the present application. The battery of the embodiment of the present application includes a battery body which includes a shell cover 100, a shell 200 and a battery cell 300. The shell 200 includes an installation cavity with an opening, the battery cell 300 is disposed in the installation cavity through the opening, the shell cover 100 matches the opening, and the shell cover 100 is used to seal the installation cavity so that the battery cell 300 is encapsulated in the shell 200.

The battery further includes a protective glue layer 400 which is coated on the outer peripheral wall of the battery body. The protective glue layer 400 includes a first adhesive segment 401 and a second adhesive segment 402 that are circumferentially coated on the outer peripheral wall of the battery body. One end of the first adhesive segment 401 is connected to one end of the second adhesive segment 402, and the other end of the first adhesive segment 401 and the other end of the second adhesive segment 402 are spaced apart in a circumferential direction of the outer peripheral wall, to form a connecting notch 404, and the part of the outer peripheral wall of the battery body is exposed outside the protective glue layer 400 through the connecting notch 404.

Meanwhile, in a first direction (a vertical direction shown in FIG. 1 and FIG. 2), both a width of the first adhesive segment 401 and a width of the second adhesive segment 402 are smaller than a width of the battery body (that is, a height in the vertical direction shown in FIG. 2) to form an exposed area, and part of the outer peripheral wall of the battery body is exposed outside the protective glue layer 400 through the exposed area.

In the battery of the embodiment of the present application, the outside of the battery body is coated with the protective glue layer 400; the protective glue layer 400 includes the first adhesive segment 401 and the second adhesive segment 402 that are circumferentially coated on the outer peripheral wall of the battery body, and the first adhesive segment 401 and the second adhesive segment 402 have the connecting notch 404 formed therebetween in the circumferential direction of the outer peripheral wall; in the first direction (the vertical direction shown in FIG. 1 and FIG. 2), both the length of the first adhesive segment 401 and the length of the second adhesive segment 402 are less than the thickness of the battery body, to form the exposed area; the part of the outer peripheral wall of the battery body is exposed outside the protective glue layer 400 through the connecting notch 404 and the exposed area; after gluing, the glue can be adhered to the part of the outer peripheral wall of the battery body through the exposed area, ensuring the installation and fixation of the battery after installed in the battery compartment, avoiding the problem of the battery shaking caused by the glue only fixing the protective glue layer but not fixing the battery body; meanwhile, the other connecting wires of the device or the connecting wires of the button battery will be routed and connected through the connecting notch 404, effectively solving the problem of the interference between the other connecting wires of the device or the connecting wires of the battery and the protective glue layer 400.

In the embodiment of the present application, the one end of the first adhesive segment 401 and the one end of the second adhesive segment 402 can be directly connected; or, the protective glue layer 400 can further include a third adhesive segment 403 that is also circumferentially coated on the outer peripheral wall of the battery body, and the third adhesive segment 403 is disposed between the first adhesive segment 401 and the second adhesive segment 402, and two ends of the third adhesive segment 403 are respectively connected to the first adhesive segment 401 and the second adhesive segment 402.

In the first direction (the vertical direction shown in FIG. 1 and FIG. 2), a width of the third adhesive segment 403 is smaller than the width of the battery body, also forming the exposed area. The width of the third adhesive segment 403 is larger than the width of the first adhesive segment 401 and the width of the second adhesive segment 402; that is, an area by which the outer peripheral wall of the battery body is coated with the third adhesive segment 403 is larger than an area by which the outer peripheral wall of the battery body is coated with the first adhesive segment 401, and is also larger than an area by which the outer peripheral wall of the battery body is coated with the second adhesive segment 402. While the protective glue layer 400 is ensured to still have a good protective effect, the glue is adhered to the part of the outer peripheral wall of the battery body through the exposed area after gluing.

Optionally, the first adhesive segment 401 and the second adhesive segment 402 are 2.5-3 mm beneath the outer peripheral wall of the battery body, and the third adhesive segment 403 is 1-2 mm beneath the outer peripheral wall of the battery body, to expose the battery body for easy glue adhesion.

Optionally, the other end of the first adhesive segment 401 and the other end of the second adhesive segment 402 are spaced apart by 6-8 mm in the circumferential direction of the outer peripheral wall, to form a 6-8 mm connecting notch 404 for leading the connection wire out of the connecting notch 404, while also increasing the adhesion area between the glue and the battery body.

Referring to FIG. 1 and FIGs. 4-6, FIGs. 4-6 are all structural schematic diagrams showing the battery cell of the battery according to embodiments of the present application. In the embodiments of the present application, the shell cover 100 may include a first shell cover 101 (which may be a negative electrode shell cover), a second shell cover 103 (which may be a positive electrode shell cover) and a first insulating sheet 102. The first shell cover 101, the first insulating sheet 102 and the second shell cover 103 are stacked along the first direction (the vertical direction shown in FIG. 1), and the first shell cover 101, the first insulating sheet 102 and the second shell cover 103 are adhered together by means of hot pressing. The first insulating sheet 102 is disposed between the first shell cover 101 and the second shell cover 103 to avoid mutual interference between the first shell cover 101 and the second shell cover 103.

The battery cell 300 has a front end surface and a back end surface in the first direction (the vertical direction shown in FIG. 1 and FIG. 2). The front end surface is adhered with a third insulating sheet 301, and the back end surface is adhered with a fourth insulating sheet 302, and both the third insulating sheet 301 and the fourth insulating sheet 302 have an avoidance hole. The battery cell 300 further includes a first tab 305 (which can be a negative tab) and a second tab 303 (which can be a positive tab); the first tab 305 extends outwards through the avoidance hole of the fourth insulating sheet 302 from the back end surface and is bent toward the fourth insulating sheet 302; the second tab 303 extends outwards through the avoidance hole of the third insulating sheet 301 from the front end surface and is bent toward the third insulating sheet 301. The third insulating sheet 301 and the fourth insulating sheet 302 are used to prevent the battery cell 300 from interfering with other components.

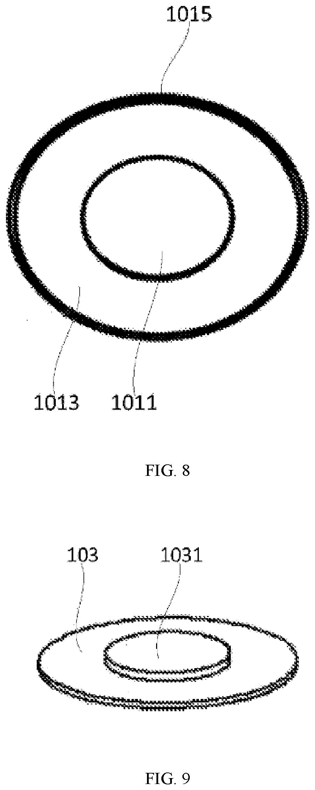

Referring to FIG. 1 and FIGs. 7-9, FIG. 7 and FIG. 8 are structural schematic diagrams of the first shell cover of the battery according to embodiments of the present application, and FIG. 9 is a structural schematic diagram of the second shell cover of the battery according to an embodiment of the present application. After the first shell cover 101, the first insulating sheet 102 and the second shell cover 103 are adhered together by means of hot pressing, the second shell cover 103 is disposed in the installation cavity; since the first shell cover 101 matches the opening, the first shell cover 101 is electrically connected to the shell 200 when the second shell cover 103 is disposed in the installation cavity through the opening. The first shell cover 101 includes a front connecting surface 1012 and a reverse connecting surface 1013 opposite to each other along the first direction (the vertical direction shown in FIG. 1), and the reverse connecting surface 1013 is connected to the first insulating sheet 102; and an edge of the reverse connecting surface 1013 is provided with an annular connecting groove 1015, the annular connecting groove 1015 matches the opening, and the annular connecting groove 1015 is welded to an end face where the opening is located, so that the first shell cover 101 is electrically connected to the shell 200.

In the above embodiment of the present application, the first shell cover 101 has a first through hole 1011, the first insulating sheet 102 has a second through hole, and the central axis of the first through hole 1011 coincides with the central axis of the second through hole. The second shell cover 103 has a connecting terminal 1031 (that is, a positive terminal) extending toward the first shell cover 101, the connecting terminal 1031 matches both the first through hole 1011 and the second through hole, the connecting terminal 1031 is connected to both the first through hole 1011 and the second through hole, and finally is exposed on the surface of the first shell cover 101 through the first through hole 1011 and the second through hole.

After the battery cell 300 is placed in the installation cavity of the shell 200, the first tab 305 (that is, the negative tab) of the battery cell 300 is welded to an inner wall surface of the shell 200, and the inner wall surface of the shell 200 can be the inner wall surface of the bottom of the shell 200, so that the first tab 305 is also electrically connected to the first shell cover 101. The second tab 303 (that is, the positive tab) is welded to the second shell cover 103, so that the second tab 303 is electrically connected to the connecting terminal 1031 (that is, the positive terminal).

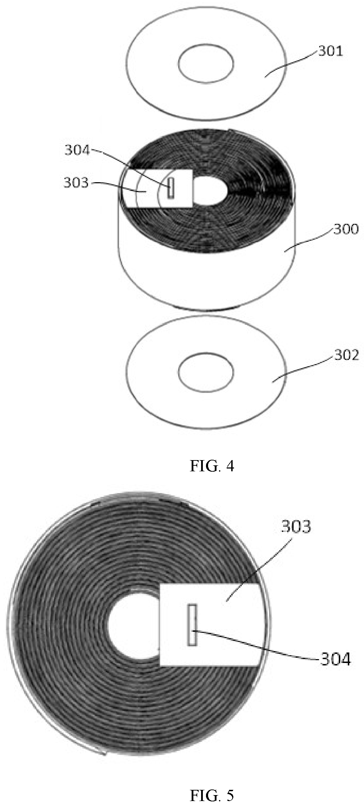

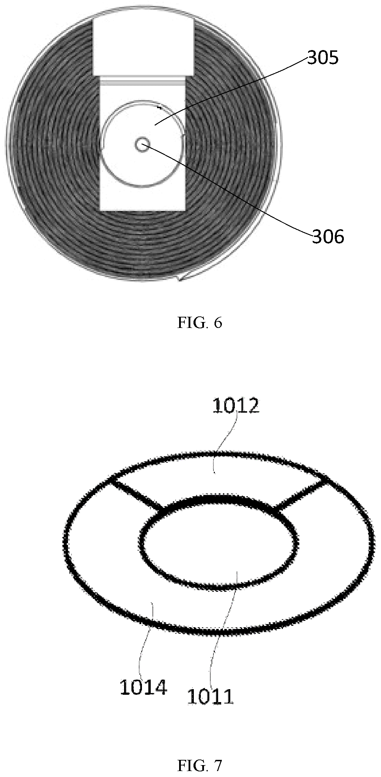

It should be noted that, with reference to FIG. 5 and FIG. 6 continually, a diameter of a first weld mark 306 on the first tab 305 is smaller than a width of the first tab 305; similarly, a width of a second weld mark 304 on the second tab 303 is smaller than a width of the second tab 303.

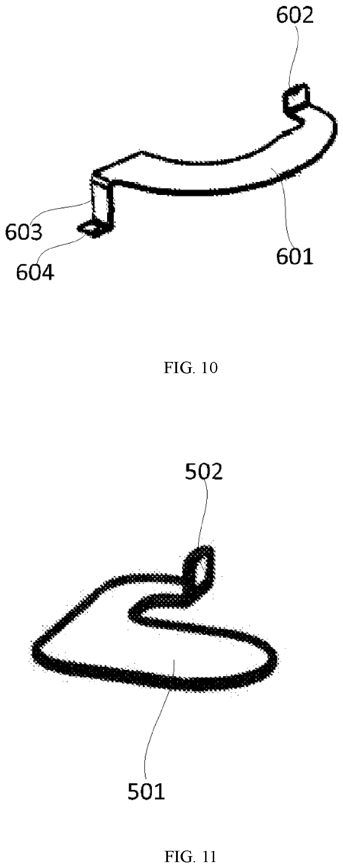

Referring to FIG. 1 and FIG. 7 continually, the battery body may further include a second insulating sheet 700, the front connecting surface 1012 is provided with an adhesive sinking platform 1014 matching the second insulating sheet 700, and the second insulating sheet 700 is connected to the adhesive sinking platform 1014. Referring to FIG. 10 and FIG. 11, FIG. 10 is a structural schematic diagram showing a first adapting member of the battery according to an embodiment of the present application, and FIG. 11 is a structural schematic diagram showing a second adapting member of the battery according to an embodiment of the present application. In the above embodiment of the present application, the battery body may further include a first adapting member 600 and a second adapting member 500. The first adapting member 600 includes a first connecting section 601 and a first adaptor 602 connected to each other, the first connecting section 601 is welded to the front connecting surface 1012 of the first shell cover 101, so that the first adaptor 602 is electrically connected to the first tab 305 (that is, the negative tab). Meanwhile, the first adaptor 602 is correspondingly placed on the second insulating sheet 700, and the second insulating sheet 700 is used to prevent the first adaptor 602 from interfering with other components.

The second adapting member 500 includes a second connecting section 501 and a second adaptor 502 connected to each other. The second connecting section 501 is welded to the connecting terminal 1031 (that is, the positive terminal) exposed on the surface of the first shell cover 101 through the first through hole 1011 and the second through hole, so that the second adaptor 502 is electrically connected to the second tab 303 (that is, the positive tab). Meanwhile, the second adaptor 502 is correspondingly placed on the second insulating sheet 700, and the second insulating sheet 700 is used to prevent the second adaptor 502 from interfering with other components.

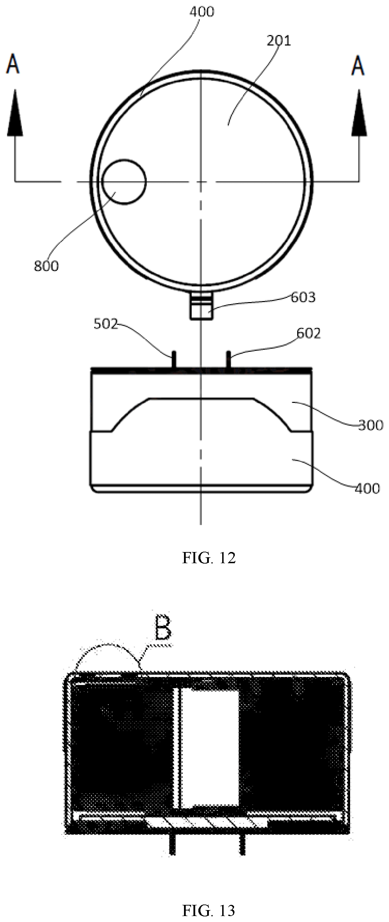

Referring to FIG. 2, FIG. 10 and FIG. 12 continually, FIG. 12 is a second structural schematic diagram of the battery according to an embodiment of the present application. In the above embodiment of the present application, the first adapting member 600 may further include a positioning member 603. The first connecting section 601 includes a first end and a second end, the first end is connected to the first adaptor 602, and the second end is connected to the positioning member 603. The positioning member 603 extends out of the battery body in a second direction (a horizontal direction shown in FIG. 2, where the second direction is perpendicular to the first direction), and the positioning member is disposed on a center line between the first adaptor 602 and the second adaptor 502. The positioning member 603 can play a positioning role during the installation of the battery into the battery compartment, ensuring that the first adaptor 602 and the second adaptor 502 are spaced apart within a reasonable distance. Meanwhile, it is ensured that the battery does not rotate after the installation of the battery into the battery compartment, to avoid deformation of the positive connecting terminal and the negative connecting terminal.

In the above embodiment of the present application, the third adhesive segment 403 is disposed between the first adhesive segment 401 and the second adhesive segment 402, and the first adaptor 602 and the second adaptor 502 are close to the third adhesive segment 403; and both the center of the third adhesive segment 403 and the center of the connecting notch 404 are located on the center line between the first adaptor 602 and the second adaptor 502; and the connecting notch 404 is symmetrically disposed with the first adaptor 602 and the second adaptor 502 along a center line of the battery body to ensure that the connecting notch 404 is located directly opposite the first adaptor 602 and the second adaptor 502; and other connecting wires of the device or the connecting wires of the button battery will be routed and connected through the connecting notch 404, to avoid interference with the first adaptor 602 and the second adaptor 502.

Referring to FIG. 2 continually, in the above embodiment of the present application, the positioning member 603 is parallel to the first connecting section 601, and the positioning member 603 is parallel to a plane where the second direction is located.

In the above embodiment of the present application, the positioning member 603 may also be perpendicular to the first connecting section 601, where, after the positioning member 603 extends out of the battery body in the second direction (the horizontal direction shown in FIG. 2), it will extend along the first direction, that is, the positioning member 603 will be bent toward the outer peripheral wall of the battery body. Meanwhile, there is a gap between the positioning member 603 and the outer peripheral wall of the battery body to prevent the negatively charged positioning member 603 from affecting the battery body.

Optionally, the gap may range from 0.2mm to 0.3 mm.

It should be noted that after the positioning member 603 is bent toward the outer peripheral wall of the battery body, the positioning member 603 may be located directly above the protective glue layer 400, or may be located in the exposed area covered with the protective glue layer 400.

It should further be noted that after the positioning member 603 is bent toward the outer peripheral wall of the battery body, a height of the positioning member 603 in the vertical direction is smaller than the height of the battery body, to avoid interference with other devices after the battery is installed into the battery compartment.

In the above embodiment of the present application, the positioning member 603 may further include a bent end 604, the bend end 604 is perpendicular to the outer peripheral wall of the battery body and extends away from the outer peripheral wall of the battery body; that is, after bent toward the outer peripheral wall of the battery body, the positioning member 603 will be continually bent along the second direction (the horizontal direction shown in FIG. 10) away from the outer peripheral wall of the battery body, to form the bent end 604, which is convenient for technicians to operate.

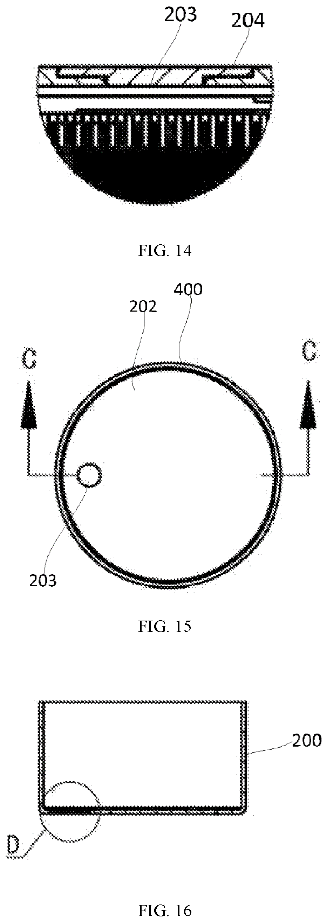

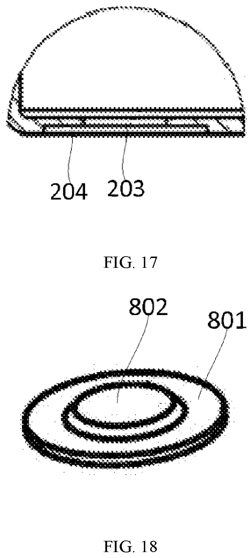

Referring to FIGs. 13-18, the shell 200 has an installation cavity 202, and a bottom surface 201 of the shell 200 is provided with a liquid-injection hole 203, and through which an electrolyte is injected into the installation cavity 202. An edge of the liquid-injection hole 203 is provided with a sealing face 204. The battery body further includes a sealing nail 800, the sealing nail 800 has an abutment portion 801 and a sealing protrusion 802, and the sealing protrusion 802 matches the liquid-injection hole 203; and the abutment portion 801 abuts against the sealing face 204 to achieve sealing of the installation cavity 202, while the sealing protrusion 802 is connected to the liquid-injection hole 203.

It should be noted that the abutment portion 801 and the sealing face 204 are welded together.

Referring to FIG. 1 and FIG. 2 continually, in the embodiment of the present application, the battery body further includes a top insulating sheet 900 disposed above the first adapting member 600 and the second adapting member 500, and the first adaptor 602 and the second adaptor 502 are exposed on the top of the battery body through an indentation of the top insulating sheet 900.

The electronic device further provided in this embodiment includes the battery described above and the battery compartment, where the battery is disposed in the battery compartment; and the part of the outer peripheral wall of the battery body is exposed outside the protective glue layer 400 through the exposed area; after gluing, the glue can be adhered to the part of the outer peripheral wall of the battery body through the exposed area, so that the adhesive glue layer is provided between the part of the outer peripheral wall and the inner wall of the battery compartment, thereby ensuring that the battery is installed and fixed after being installed in the battery compartment, and avoiding the problem of battery shaking caused by the glue only fixing the protective glue layer 400 but not fixing the battery body.

Meanwhile, the electronic device further includes wirings located in the connecting notch 404; and another part of the outer peripheral wall of the battery body is exposed outside the protective glue layer 400 through the connecting notch 404, and the another part of the outer peripheral wall is used for routing, so that the wirings (the other connecting wires or the connecting wires of the button battery) can be routed and connected through the connecting notch 404, effectively solving the problem of interference between the other connecting wires of the device or the connecting wires of the battery and the protective glue layer 400.

In the battery and the electronic device provided in the embodiments, the outside of the battery body is coated with the protective glue layer 400 of the battery, and the protective glue layer 400 includes the first adhesive segment 401 and the second adhesive segment 402 that are circumferentially coated on the outer peripheral wall of the battery body, and the first adhesive segment 401 and the second adhesive segment 402 have the connecting notch 404 formed therebetween in the circumferential direction of the outer peripheral wall; in the first direction (the vertical direction shown in FIG. 1 and FIG. 2), both the length of the first adhesive segment 401 and the length of the second adhesive segment 402 are less than the thickness of the battery body to form the exposed area, and the part of the outer peripheral wall of the battery body is exposed outside the protective glue layer 400 through the connecting notch 404 and the exposed area; after gluing, the glue can be adhered to the part of the outer peripheral wall of the battery body through the exposed area, ensuring the installation and fixation of the battery after installed in the battery compartment, avoiding the problem of battery shaking caused by the glue only fixing the protective glue layer but not fixing the battery body; meanwhile, the other connecting wires of the device or the connecting wires of the button battery will be routed and connected through the connecting notch 404, effectively solving the problem of the interference between the other connecting wires of the device or the connecting wires of the battery and the protective glue layer 400.

Finally, it should be noted that the above embodiments are only used to illustrate, rather than to limit, the technical solutions of the present application. Although the present application has been described in detail with reference to the aforementioned embodiments, those ordinarily skilled in the art should understand that: the technical solutions recited in the aforementioned embodiments can still be amended, or some or all of the technical features therein can be replaced equivalently. However, such amendments or replacements do not make the essence of the corresponding technical solutions deviate from the scope of the technical solutions in the embodiments of the present application.

In a first aspect, the present application provides a battery, including: a battery body and a protective glue layer; where the protective glue layer includes a first adhesive segment and a second adhesive segment that are circumferentially coated on an outer peripheral wall of the battery body, and the first adhesive segment and the second adhesive segment have a connecting notch formed therebetween in a circumferential direction of the outer peripheral wall;
both a length of the first adhesive segment and a length of the second adhesive segment are less than a thickness of the battery body in a first direction, to form an exposed area; and part of the outer peripheral wall of the battery body is exposed outside the protective glue layer through the connecting notch and the exposed area.

In a second aspect, in the battery according to the first aspect, the protective glue layer further includes a third adhesive segment, the third adhesive segment is disposed between the first adhesive segment and the second adhesive segment, and the third adhesive segment is connected to both the first adhesive segment and the second adhesive segment;
in the first direction, a width of the third adhesive segment is smaller than a width of the battery body, and the width of the third adhesive segment is greater than a width of the first adhesive segment and a width of the second adhesive segment.

In a third aspect, in the battery according to the second aspect, the battery body includes a shell, a battery cell, a first shell cover, a second shell cover and a first insulating sheet; the shell includes an installation cavity with an opening, and the battery cell is disposed in the installation cavity through the opening;
the first shell cover, the first insulating sheet and the second shell cover are stacked along the first direction, the first insulating sheet is disposed between the first shell cover and the second shell cover, and the second shell cover is disposed in the installation cavity through the opening;
the first shell cover has a first through hole, the first insulating sheet has a second through hole, a central axis of the first through hole coincides with a central axis of the second through hole, the second shell cover has a connecting terminal extending toward the first shell cover, the connecting terminal matches both the first through hole and the second through hole, and the connecting terminal is exposed on a surface of the first shell cover through the first through hole and the second through hole;
the battery cell includes a first tab and a second tab, the first tab is electrically connected to an inner wall surface of the shell, and the second tab is electrically connected to the second shell cover.

In a fourth aspect, in the battery according to the third aspect, the first shell cover includes a front connecting surface and a reverse connecting surface opposite to each other along the first direction, the reverse connecting surface is connected to the first insulating sheet, and an edge of the reverse connecting surface is provided with an annular connecting groove, and the annular connecting groove matches the opening.

In a fifth aspect, in the battery according to the fourth aspect, the battery body further includes a first adapting member, a second adapting member and a second insulating sheet;
the front connecting surface is provided with an adhesive sinking platform matching the second insulating sheet;
a first connecting section of the first adapting member is electrically connected to the front connecting surface of the first shell cover, and a first adaptor of the first adapting member is correspondingly placed on the second insulating sheet;
a second connecting section of the second adapting member is electrically connected to the connecting terminal, and a second adaptor of the second adapting member is correspondingly placed on the second insulating sheet.

In a sixth aspect, in the battery according to the fifth aspect, the first adapting member further includes a positioning member, the first connecting section includes a first end and a second end, the first adaptor is connected to the first end, the positioning member is connected to the second end, the positioning member extends out of the battery body in a second direction, and the positioning member is disposed on a center line between the first adaptor and the second adaptor;
where the second direction is perpendicular to the first direction.

In a seventh aspect, in the battery according to the sixth aspect, the positioning member is parallel to the first connecting section.

In an eighth aspect, in the battery according to the sixth aspect, the positioning member is perpendicular to the first connecting section, the positioning member extends along the first direction, and a gap is present between the positioning member and the outer peripheral wall of the battery body.

In a ninth aspect, in the battery according to the eighth aspect, the positioning member includes a bent end, and the bent end is perpendicular to the outer peripheral wall of the battery body and extends away from the outer peripheral wall of the battery body.

In a tenth aspect, in the battery according to the fifth aspect, a center line of the third adhesive segment is aligned with a center line of a gap between the first adapting member and the second adapting member.

In an eleventh aspect, in the battery according to the fifth aspect, the connecting notch is symmetrically provided with the first adapting member and the second adapting member along a center line of the battery body.

In a twelfth aspect, in the battery according to the second aspect, in the first direction, the width of the first adhesive segment and the width of the second adhesive segment are smaller than a width of the outer peripheral wall of the battery body by 2.5 to 3 mm, and the width of the third adhesive segment is smaller than the width of the outer peripheral wall of the battery body by 1 to 2 mm.

In a thirteenth aspect, in the battery according to the second aspect, one end of the first adhesive segment and one end of the second adhesive segment are connected to the third adhesive segment, and the other end of the first adhesive segment and the other end of the second adhesive segment are spaced apart to form, in the circumferential direction of the outer peripheral wall of the battery body, the connecting notch of 6 to 8 mm.

the first tab is welded to the inner wall surface of the shell, and a projection area of a first weld mark on the first tab in the first direction is smaller than a projection area of the first tab in the first direction;
the second tab is welded to the second shell cover, and a projection area of a second weld mark on the second tab in the first direction is smaller than a projection area of the second tab in the first direction.

In a fourteenth aspect, in the battery according to the third aspect, the first tab is welded to the inner wall surface of the shell, and a projection area of a first weld mark on the first tab in the first direction is smaller than a projection area of the first tab in the first direction;
the second tab is welded to the second shell cover, and a projection area of a second weld mark on the second tab in the first direction is smaller than a projection area of the second tab in the first direction.

In a fifteenth aspect, in the battery according to the third aspect, the shell is provided with a liquid-injection hole, and an edge of the liquid-injection hole is provided with a sealing face;
the battery body further includes a sealing nail, the sealing nail has an abutment portion and a sealing protrusion, and the sealing protrusion matches the liquid-injection hole; and the abutment portion abuts against the sealing face while the sealing protrusion is connected to the liquid-injection hole.

In a sixteenth aspect, in the battery according to the fifteenth aspect, the abutment portion is welded to the sealing face.

In a seventeenth aspect, in the battery according to the fifth aspect, the battery cell has a front end surface and a back end surface in the first direction, the front end surface is adhered with a third insulating sheet, and the back end surface is adhered with a fourth insulating sheet;
both the third insulating sheet and the fourth insulating sheet have an avoidance hole, and the first tab extends outwards through the avoidance hole of the fourth insulating sheet from the back end surface and is bent toward the fourth insulating sheet; the second tab extends outwards through the avoidance hole of the third insulating sheet from the front end surface and is bent toward the third insulating sheet.

In an eighteenth aspect, in the battery according to the fifth aspect, the battery body further includes a top insulating sheet disposed above the first adapting member and the second adapting member, and the first adaptor and the second adaptor are exposed on a top of the battery body through an indentation of the top insulating sheet.

In a nineteenth aspect, in the battery according to the eighth aspect, the gap between the positioning member and the outer peripheral wall of the battery body ranges from 0.2mm to 0.3 mm.

In a twentieth aspect, the present application provides an electronic device, including the battery according to any one of the first aspect to the nineteenth aspect, and a battery compartment; the battery is disposed inside the battery compartment, part of an outer peripheral wall of a battery body is exposed outside a protective glue layer through an exposed area, and an adhesive glue layer is disposed between the part of the outer peripheral wall and an inner wall of the battery compartment;
another part of the outer peripheral wall of the battery body is exposed outside the protective glue layer through a connecting notch, and the electronic device further includes wirings located in the connecting notch.

## Claims

1. A battery, comprising: a battery body and a protective glue layer (400); wherein the protective glue layer (400) comprises a first adhesive segment (401) and a second adhesive segment (402) that are circumferentially coated on an outer peripheral wall of the battery body, and the first adhesive segment (401) and the second adhesive segment (402) have a connecting notch (404) of the protective glue layer (400) formed therebetween in a circumferential direction of the outer peripheral wall;
the battery body comprises a shell (200), a battery cell (300), a first shell cover (101), a second shell cover (103) and a first insulating sheet (102); the shell comprises an installation cavity (202) with an opening, and the battery cell (300) is disposed in the installation cavity (202) through the opening; and
the first shell cover (101), the first insulating sheet (102) and the second shell cover (103) are stacked along a first direction, the first insulating sheet (102) is disposed between the first shell cover (101) and the second shell cover (103), and the second shell cover (103) is disposed in the installation cavity (202) through the opening;
part of the outer peripheral wall of the battery body is exposed outside the protective glue layer (400) through the connecting notch (404).

2. The battery according to claim 1, wherein the protective glue layer (400) further comprises a third adhesive segment (403), the third adhesive segment (403) is disposed between the first adhesive segment (401) and the second adhesive segment (402), and the third adhesive segment (403) is connected to both the first adhesive segment (401) and the second adhesive segment (402);
in the first direction, both a width of the first adhesive segment (401) and a width of the second adhesive segment (402) are less than a thickness of the battery body, to form an exposed area; part of the outer peripheral wall of the battery body is exposed outside the protective glue layer (400) through the exposed area;
in the first direction, a width of the third adhesive segment (403) is smaller than the thickness of the battery body, and the width of the third adhesive segment (403) is greater than the width of the first adhesive segment (401) and the width of the second adhesive segment (402).

3. The battery according to claim 2, wherein the first shell cover (101) has a first through hole (1011), the first insulating sheet (102) has a second through hole, a central axis of the first through hole (1011) coincides with a central axis of the second through hole, the second shell cover (103) has a connecting terminal (1031) extending toward the first shell cover (101), the connecting terminal (1031) matches both the first through hole (1011) and the second through hole, and the connecting terminal (1031) is exposed on a surface of the first shell cover (101) through the first through hole (1011) and the second through hole;
the battery cell (300) comprises a first tab (305) and a second tab (303), the first tab (305) is electrically connected to an inner wall surface of the shell (200), and the second tab (303) is electrically connected to the second shell cover (103).

4. The battery according to claim 3, wherein the first shell cover (101) comprises a front connecting surface (1012) and a reverse connecting surface (1013) opposite to each other along the first direction, the reverse connecting surface (1013) is connected to the first insulating sheet (102), and an edge of the reverse connecting surface (1013) is provided with an annular connecting groove (1015), and the annular connecting groove (1015) matches the opening.

5. The battery according to claim 4, wherein the battery body further comprises a first adapting member (600), a second adapting member (500) and a second insulating sheet (700);
the front connecting surface (1012) is provided with an adhesive sinking platform (1014) matching the second insulating sheet (700);
a first connecting section (601) of the first adapting member (600) is electrically connected to the front connecting surface (1012) of the first shell cover (101), and a first adaptor (602) of the first adapting member (600) is correspondingly placed on the second insulating sheet (700);
a second connecting section (501) of the second adapting member (500) is electrically connected to the connecting terminal (1031), and a second adaptor (502) of the second adapting member (500) is correspondingly placed on the second insulating sheet (700).

6. The battery according to claim 5, wherein the first adapting member (600) further comprises a positioning member (603), the first connecting section (601) comprises a first end and a second end, the first adaptor (602) is connected to the first end, the positioning member (603) is connected to the second end, the positioning member (603) extends out of the battery body in a second direction, and the positioning member (603) is disposed on a center line between the first adaptor (602) and the second adaptor (502);
wherein the second direction is perpendicular to the first direction.

7. The battery according to claim 6, wherein the positioning member (603) is parallel to the first connecting section (601).

8. The battery according to claim 6, wherein the positioning member (603) is perpendicular to the first connecting section (601), the positioning member (603) extends along the first direction, and a gap is present between the positioning member (603) and the outer peripheral wall of the battery body;
wherein the positioning member (603) comprises a bent end (604), and the bent end (604) is perpendicular to the outer peripheral wall of the battery body and extends away from the outer peripheral wall of the battery body.

9. The battery according to claim 5, wherein a center line of the third adhesive segment (403) is aligned with a center line of a gap between the first adapting member (600) and the second adapting member (500); and/or
the connecting notch (404) is symmetrically provided with the first adapting member (600) and the second adapting member (500) along a center line of the battery body.

10. The battery according to claim 2, wherein in the first direction, the width of the first adhesive segment (401) and the width of the second adhesive segment (402) are smaller than a width of the outer peripheral wall of the battery body by 2.5 to 3 mm, and the width of the third adhesive segment (403) is smaller than the width of the outer peripheral wall of the battery body by 1 to 2 mm;
wherein one end of the first adhesive segment (401) and one end of the second adhesive segment (402) are connected to the third adhesive segment (403), and the other end of the first adhesive segment (401) and the other end of the second adhesive segment (402) are spaced apart to form, in the circumferential direction of the outer peripheral wall of the battery body, the connecting notch (404) of 6 to 8 mm.

11. The battery according to claim 3, wherein the first tab (305) is welded to the inner wall surface of the shell (200), and a projection area of a first weld mark (306) on the first tab (305) in the first direction is smaller than a projection area of the first tab (305) in the first direction;
the second tab (303) is welded to the second shell cover (103), and a projection area of a second weld mark (304) on the second tab (303) in the first direction is smaller than a projection area of the second tab (303) in the first direction.

12. The battery according to claim 3, wherein the shell (200) is provided with a liquid-injection hole (203), and an edge of the liquid-injection hole (203) is provided with a sealing face (204);
the battery body further comprises a sealing nail (800), the sealing nail (800) has an abutment portion (801) and a sealing protrusion (802), and the sealing protrusion (802) matches the liquid-injection hole (203); and the abutment portion (801) abuts against the sealing face (204) while the sealing protrusion (802) is connected to the liquid-injection hole (203);
wherein the abutment portion (801) is welded to the sealing face (204).

13. The battery according to claim 5, wherein the battery cell (300) has a front end surface and a back end surface in the first direction, the front end surface is adhered with a third insulating sheet (301), and the back end surface is adhered with a fourth insulating sheet (302);
both the third insulating sheet (301) and the fourth insulating sheet (302) have an avoidance hole, and the first tab (305) extends outwards through the avoidance hole of the fourth insulating sheet (302) from the back end surface and is bent toward the fourth insulating sheet (302); the second tab (303) extends outwards through the avoidance hole of the third insulating sheet (301) from the front end surface and is bent toward the third insulating sheet (301);
wherein the battery body further comprises a top insulating sheet (900) disposed above the first adapting member (600) and the second adapting member (500), and the first adaptor (602) and the second adaptor (502) are exposed on a top of the battery body through an indentation of the top insulating sheet (900).

14. The battery according to claim 8, wherein the gap between the positioning member (603) and the outer peripheral wall of the battery body ranges from 0.2mm to 0.3 mm.

15. An electronic device, comprising the battery according to any one of claims 1 to 14 and a battery compartment; the battery is disposed inside the battery compartment, part of the outer peripheral wall of the battery body is exposed outside the protective glue layer (400) through an exposed area, and an adhesive glue layer is disposed between the part of the outer peripheral wall and an inner wall of the battery compartment;
another part of the outer peripheral wall of the battery body is exposed outside the protective glue layer (400) through a connecting notch (404), and the electronic device further comprises wirings located in the connecting notch (404).
